# EUROPEAN PATENT SPECIFICATION

(11) **EP 0 842 842 B1**
(45) Date of publication and mention of the grant of the patent: **02.05.2003**
(21) Application number: 97203467.2
(22) Date of filing: 08.11.1997
(51) Int. Cl.: B62D 33/06, B60H 1/00

(54) **Combine harvester cab lay-out for visibility, serviceability and space**
Auslegung einer Kabine für Getreide- Mähdrescher mit verbesserter Sicht, Wartung und Raumausnutzung
Arrangement de cabine pour moissoneuse-batteuse améliorant la visibilité, l'entretien et l'espace intérieur

(30) Priority: 12.11.1996 US 30498 P; 20.06.1997 US 880120
(43) Date of publication of application: 20.05.1998
(73) Proprietor: CNH Belgium N.V., 8210 Zedelgem (BE)
(72) Inventor: Stauffer, David B., New Holland, PA 17557 (US); Strong, Russel W., Craftsbury Common, VT 05827 (US)
(74) Representative: Vandenbroucke, Alberic

(56) References cited:
- DE-A- 3 441 219
- GB-A- 1 160 005
- US-A- 4 416 486

## Description

This invention relates to the improvement of an agricultural harvester. More specifically it relates to an improvement of the cab of a self-propelled agricultural harvester. A harvesting machine according to the preamble of claim 1 is generally known.

Mechanical harvesting of grain and other crops has taken place for decades. However, efforts continue in the attempt to make harvesting operations more efficient and effective. An agricultural harvester, such as a combine, generally includes a header which cuts the crop. The header then moves the cut crop into a feeder house. The feeder house lifts the cut crop into the threshing and separation areas of the combine. The grain is separated from the stalk by a rotor or threshing system. The grain is then moved and stored in a grain tank. The chaff and trash are deposited from the rear of the combine. An operator usually runs these various operations from a glass-enclosed cab. Typically, a cab is located behind the header and in front of the threshing and separation areas of the combine. An operator can observe most of the combine activities from the cab. During harvesting periods it is not uncommon for the combine to be operated for an extended time. Sometimes a single operator will use a combine for 16 to 18 hours a day. Furthermore, several operators may alternate in the use of the combine. Therefore is it necessary to provide a cab which will allow maximum operator comfort and flexibility. This will permit the operator to remain mentally alert for the long time intervals needed to harvest crops. Aspects of maintaining the operator's alertness includes providing a combine cab which is environmentally controlled, spacious and isolated from noise.

The effort to design and manufacture a better combine cab is considerable and has taken several approaches. In the early days of combine harvesting, there were no cabs and the operator was exposed to the outside elements during farming operations. During combine operations, a considerable amount of particles are released in the air. Furthermore, the noise created by engine, header and threshing system is quite loud.

Current cab design focuses on having a heating, ventilation and air conditioning system to maintain a comfortable working environment inside the cab. Current cab design also focuses on maintaining a good view of the header. Both of these focuses have resulted in several shortcomings. Usually the heating, ventilation and air conditioning unit is positioned either under the driver's chair or in the cab ceiling.

When the unit is positioned under the driver's chair, dust or dirt can easily enter the return air system degrading or possibly damaging the unit. Also when the unit is positioned beneath the seat, the distribution ducts have to be inserted in the roof posts. This necessitates an enlargement of the post circumference to allow for air passage. This results in a greater obstruction to viewing the farming operations.

When the unit is located in the ceiling of the cab, the condensation can drip into the headliner of the cab or onto the operator or control equipment.

Periodically it may be necessary to remove the cab to perform work on the threshing system. Also it is frequently necessary to clean the heater and evaporator cores. This is difficult to accomplish in a roof or floor-mounted system. Also, because the engine coolant and refrigerant lines are moved, the ethylene glycol and the refrigerant contained within those lines is usually vented. Because of environmental concerns this engenders considerable additional expense.

Currently, most cabs are constructed from a flat glass which requires a frame to prevent the glass from warping. The use of glass surfaces which are parallel to each other can also create a standing noise wave within the cab. The John Deere 'Maximer' combine harvester cab uses framed flat glass for the doors and a curved windshield. A standing noise wave can develop between the doors.

The prior art illustrates these and additional difficulties. US-A-4,088,364 discloses an environmental control system and cab combination. This design places the air conditioner unit beneath the operator's chair. The return air intake 116 is located in close proximity to the cab floor. The fresh air is forced through the cab posts from an opening near the ceiling. As mentioned previously, dirt and dust on the operator's shoes would be drawn into the return air filter. The size of the cab post needs to be increased to accommodate the fresh air. The larger posts inhibit the operator from viewing the header or grain tank unloading auger (as seen from the rear of the cab). The placement of the air conditioning unit beneath the operator's chair also limits the space within the cab.

US-A-4,605,259 discloses an operator's cab for a crop harvesting machine. The left door and right doors are parallel to each other resulting in the potential creation of a resonant sound wave.

US-A-4,772,065 discloses a tractor cabin and manufacturing method therefor. Again the parallel wall and door surfaces can create a standing noise wave, resulting in discomfort for the operator.

US-A-4,440,437 discloses an operator enclosure for a self-propelled harvester. A pair of lower mountings allows the cab to tilted forward and access to be obtained to the threshing system beneath. Unfortunately, in order to allow the cab to tilt, its size is must be limited. To minimize the standing wave effect, the rear wall of the cab is affixed to the grain tank and a sound absorbing material is used. This increases the complexity of the cab. Generally, the use of a flat glass for doors includes a frame to support the glass. Without a frame, the glass warp which detrimentally impacts the seal between the remaining cab frame and door.

US-A-4,416,486 discloses a cab for a combine. This disclosure reveals several parallel surfaces which create standing waves. Again, the flat glass door required a frame for support.

US-A-5,538,472 discloses an agricultural vehicle cab temperature control system. Again, a portion of the cooling system is located beneath the driver's chair. When the cab is removed the heat exchanger lines must be separated and coolant and refrigerant is released. The separation of the heating, ventilation and air conditioning (HVAC) unit from the cab, necessitates several remote controls between the cab and HVAC unit. The control cables to between the interior of the cab to the exterior of the cab creates a 'noise conduit' which allows the noise to travel into the cab.

Consequently, the need exists for a cab of an agricultural harvester from which the operator has an unobstructed view of farming operations, which is spacious, has a well-designed environment system and which allows for easy access to the harvesting and crop processing systems.

According to one aspect of the present invention, there is provided an agricultural harvesting machine, having an operator's cab which comprises:
a lower panel, a right front post, a left front post, a right rear post and a left rear post, each said post being generally perpendicularly affixed to the lower panel;
an upper panel supported by said right front post, said left front post, said right rear post and said left rear post;
a front windshield affixed to the lower panel, the upper panel, the right front post and the left front post;
a left door pivotally affixed to the left front post;
a right door generally parallel to the left door, said right door being pivotally affixed to the right front post; and
a rear panel, generally parallel to the front windshield and being affixed to the lower panel, the left rear post, the right rear post and the upper panel; and
an operator's chair, installed in front of said rear panel;
characterized in that said rear panel comprises:
an upper rear panel section, affixed to the left rear post, the right rear post and the upper panel;
a lower rear panel section, installed below said upper rear panel section and being affixed to the lower panel, the left rear post and the right rear post; and
a horizontal deck, extending between and being affixed to said upper and lower rear panel sections.

This feature provides an optimized harvester cab with increased space behind the operator's chair.

Preferably the horizontal deck is positioned at a height between the shoulder and the elbow of an operator seated on the chair. The deck may also comprise one or more storage boxes.

According to another aspect of the present invention there is provided an agricultural harvesting machine having a cab and a heating, ventilation and air conditioning (HVAC) unit having a core comprising at least one heat exchanger and being connected to distribution ducting for supplying conditioned air to the interior of said cab,
said unit being positioned on the exterior of said cab, adjacent said lower rear panel section, and said core being connected to refrigerant and/or engine coolant lines.

Such unit may be affixed on an exterior surface of the lower rear panel section. Most advantageously the core may be removably connected to the HVAC unit and the lines may not be permanently attached to the cab, whereby said cab can be removed from said harvester without disconnection of said lines from said core, thereby preventing loss of refrigerant and/or engine coolant.

The HVAC unit may take fresh air through a fresh air filter which is affixed to an exterior surface of the lower rear panel section and connected to said unit. To diminish the intake of dust particles the HVAC unit may also take return air from the interior of the cab via an inlet which is positioned at a substantial height (e.g. 150 mm) above the floor panel of the cab.

Advantageously, the distribution ducting for the HVAC unit can be located on the exterior of the cab.

The HVAC unit may be located near one of the storage boxes for cold storage utility.

According to still another aspect of the present invention, there is provided an agricultural harvester having an operator's cab comprising a door which has a compound curved glass surface. Such surface has a vertical and a horizontal curvature. When both doors have such non-parallel glass surfaces, no standing sound wave can develop between the doors, thereby enhancing operator comfort during harvesting operations. The surface may be self-supporting such that no door frame will be required. The glass surface itself may then be pivotally affixed to the front post by a pair of hinges. The pinnacle of the curve glass surface may be located at a height between the elbow and shoulder of the operator, thereby giving to the operator the impression of a more spacious cab interior.

The optimized harvester cab may also have a pair of front support posts which are smaller in circumference than the rear posts allowing for a less obstructed view of the header.

An embodiment of the present invention will now be described in further detail, by way of example, with reference to the following drawings, in which:

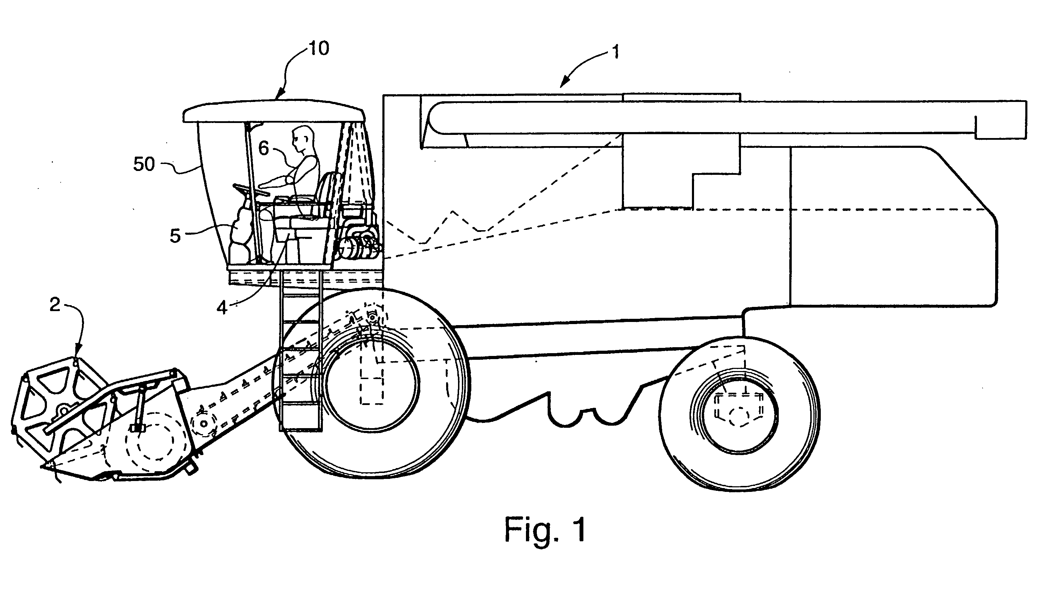

Figure 1 is a side elevational view of a combine, comprising a cab;
Figure 2 is an enlarged side elevation of the combine cab;
Figure 3 is a horizontal sectional view of the cab taken on the line 3-3 of Figure 2, with the steering column and pedals omitted and the location of the seats and control console indicated by phantom lines;
Figure 4 is a vertical sectional view of the cab taken on the line 4-4 of Figure 3; and
Figure 5 is a horizontal sectional view taken on the line 5-5 of Figure 3, showing the relationship of the HVAC unit to the cab structure.

Throughout this description, left and right references are used as a matter of convenience and are determined by standing at the rear of the combine and facing the forward end in the normal direction of travel. Likewise, forward and rearward are determined by the normal direction of travel of the combine. Upward or downward orientations are relative to the ground or the operating surface. Horizontal or vertical planes are also relative to the ground.

A typical combine harvester 1 has a header 2 for cutting a crop. As the combine harvester 1 and header 2 are moved forward, the grain and stalk are cut by the header. The header 2 moves the grain into an auger trough. A transverse auger pushes the grain and stalk in the auger trough to the centre of the header. Located at the centre of the header is the feeder house or elevator. The feeder house moves the grain and stalks rearward into the threshing and separation systems of the combine. After processing and separation, the processed grain is stored in a grain tank located near the top of the combine. The trash or chaff is ejected from the rear of the combine. The operator 6 runs the combine harvester 1 from a cab 10 located behind the header 2 and at the front of the combine. From the cab the operator 6 can observe most the various combine functions. The cab 10 usually has a large glass windshield 50 or several windows which afford the operator the maximum ability to monitor the header 2.

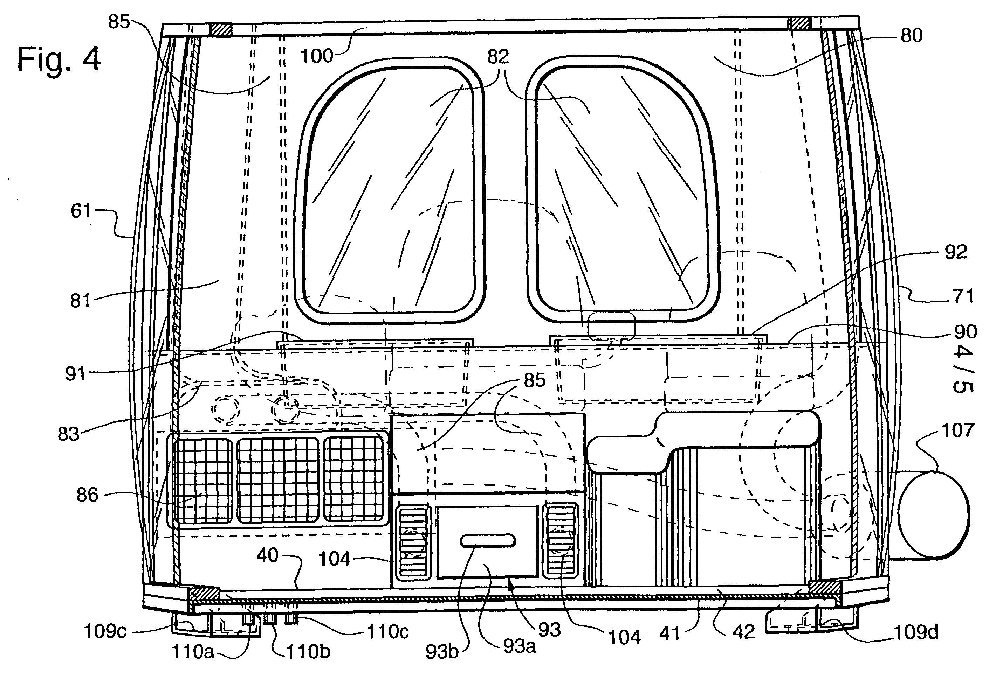

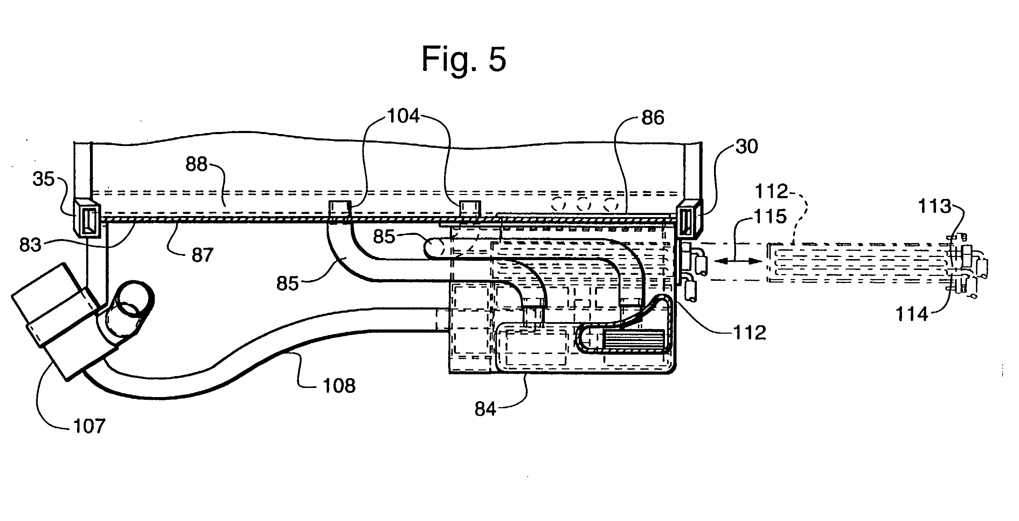

A general review of the major elements of the cab 10 will be followed by a more detailed description later. The operator 6 controls the harvesting operations of the combine harvester 1 from the cab 10. Located in the centre of the cab is a steering column 5. Behind the steering column 5 is an operator's chair 4. The cab 10 comprises a lower panel 40 with four posts 20, 25, 30 and 35 generally perpendicularly attached thereto. An upper panel 100 is supported by the four posts 20, 25, 30 and 35. A windshield 50 with a first compound curved glass 51 is attached to the front posts 20 and 25. A left door 70 and right door 60 are pivotally affixed to the left front post 25 and right front post 20, respectively. A rear panel 80 has an upper rear panel 81, lower rear panel 83 and a horizontal deck 90 extending between the upper and lower rear panels 81, 83. The heating, ventilation and air conditioning (HVAC) unit 84 is attached to the exterior 87 of the lower rear panel 83. Air is brought to the HVAC unit 84 through a return air filter 86 and a fresh air filter 107 (Figures 4 and 5). The processed air is returned to the interior 88 of the cab 10 by distribution ducts 85.

The lower panel 40 is the bottom of the combine cab 10 and has a curved rectangular shape. The lower panel 40 has a steering mount 43 for the steering column 5. The steering mount 43 is a large rectangular opening surrounded by four bolt holes. The steering column motor (not shown) is inserted into the steeling mount 43. The steering column 5 carries the steering motor and is partially supported at the four bolt holes. A noise-reducing mat 42 may cover the lower panel 40. The mat 42 helps to limit the noise from the combine engine, header and threshing system. Affixed to the lower panel 40 is also the operator's chair 4. The operator's chair 4 has a driver's seat storage area 93, containing a drawer 93a with a pull handle 93b (Figure 4).

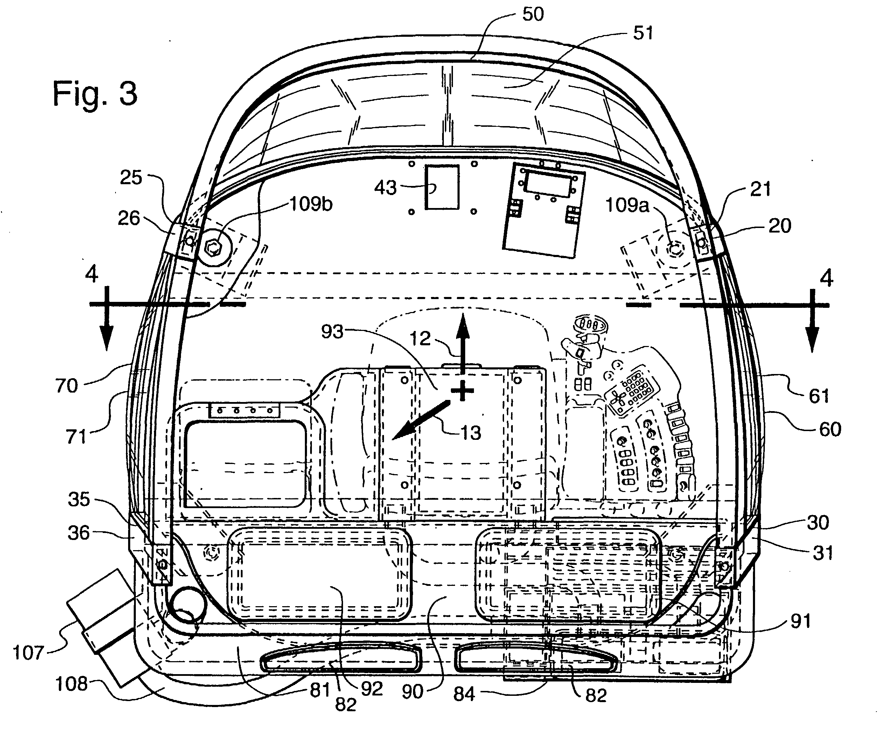

The four posts 20, 25, 30, 35 are generally perpendicularly affixed to the lower panel 40. The right front post 20 and left front post 25 are attached towards the front of the lower panel 40. The right front post 20 has a right front post circumference 21 and the left front post 25 has a left front post circumference 26 (Figure 3). The right rear post 30 and left rear post 35 are attached at the rear of the lower panel 40. The right rear post 30 has a right rear post circumference 31 and the left rear post 35 has a left rear post circumference 36. Because the posts are not used to distribute air throughout the cab, they are considerable smaller in circumference than current art posts. Furthermore, in the present invention, the front posts 20 and 25 have smaller circumferences 21 and 26 than the rear posts' circumferences 31 and 36. The front posts each have a general circumference of 240 mm and the rear posts each have a general circumference of 340 mm. The smaller front post geometry helps to provide the operator 6 with a less obstructed view of the header 2 of the combine. The reduced geometry of the rear posts, while larger than the front post but smaller than prior art rear posts, helps the operator observe the rear of the combine. This feature is especially valuable for rearward viewing 13 of the unloading auger when grain is being removed from the grain tank.

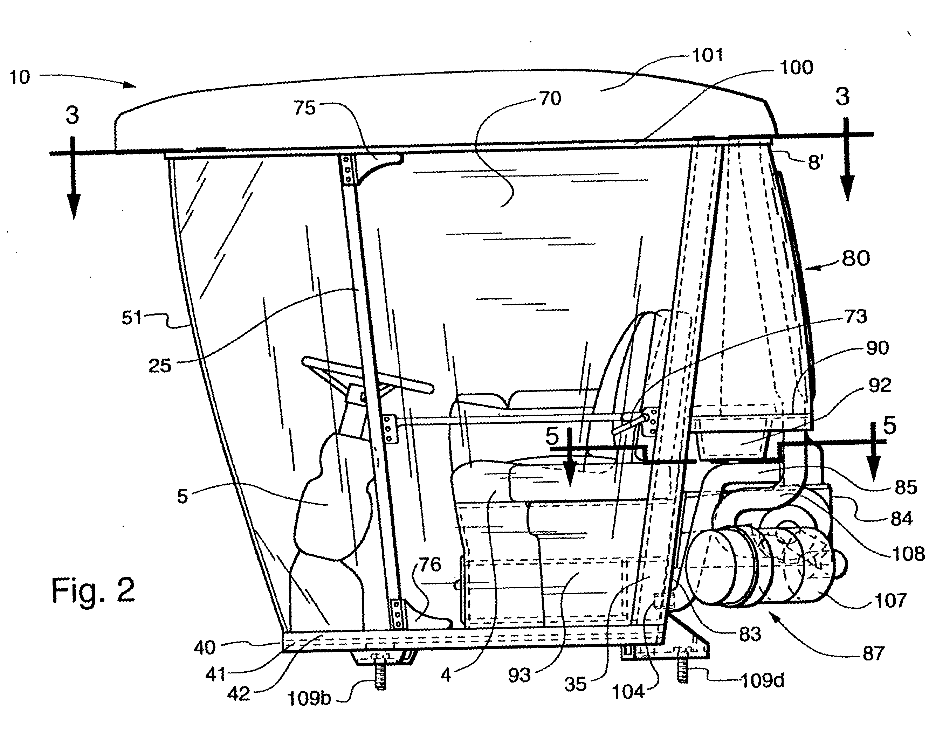

The upper panel 100 is perpendicularly supported by the front and rear posts 20, 25, 30 and 35 (Figure 2). The upper panel 100 has a roof 101. The upper panel 100 has a ceiling vent (not shown) for projecting conditioned air downwards into the cab 10. The upper panel 100 is generally parallel to the lower panel 40 and has approximately the same shape of the lower panel 40.

The front windshield 50 is located at the front end of the cab. The windshield 50 has a first compound curved glass 51, which has two curvatures: there is a vertical curve and a horizontal curve in the windshield 50. The windshield 50 is attached to the upper panel 100, the lower panel 40, the right front post 20 and the left front post 25.

Pivotally affixed to the front posts 20 and 25 are the quadrilaterally shaped left door 70 and the quadrilaterally shaped right door 60, respectively. The four sided nature of each door provides an easier means by which to enter and depart the cab. This is opposed to a more triangularly shaped door which is typically smaller at the base, thereby creating a smaller door threshold to enter or depart the cab through. The left door 70 consists of a second compound curved glass 71. Similar to the first compound curved glass 51 of the front windshield 50, the second compound curved glass 61 has two curves. One curve is horizontal and the other curve is vertical. Similarly, the right door 60 has a third compound curved glass 61. The use of compound curved glass in the left and right doors offers several advantages. Compound curved glass will minimize sound dispersion and prevent the creation of a standing noise wave. Otherwise, the use of flat glass in the doors might have resulted in the creation of a standing noise wave between the doors. The use of compound curved glass in the doors eliminates the expense of a frame which is commonly used in flat glass doors. Flat glass bends and, over time, will not maintain an effective seal when closed. To overcome this problem a frame and an extensive rubber seal needs to be used. A compound curved glass door will bend less, and consequently will not require a frame or extensive seal. Furthermore, the orientation of the second compound curved glass 71 and third compound curved glass 61 so that convex of each curve is oriented towards the exterior of the cab, creates a larger cab interior at a height that the operator is most conscious of.

The left door 70 and right door 60 are pivotally affixed to the left front post 25 and the right front post 20, respectively, by a pair of hinges. There is a first left hinge 75 and a second left hinge 76 attaching the left door 70 to the left front post 25. Likewise there is a first right hinge and a second right hinge (not shown) attaching the right door 60 to the right front post 20. The left door 70 may be pulled against the left rear post 35, the lower panel 40 and the upper panel 100. Likewise, the right door 60 may be pulled against the right rear post 30, the lower panel 40 and the upper panel 100. The left door 70 also has a left angled door handle 73. The handle 73 is designed to be oriented at a 15 degree angle on the exterior of the door. This allows for a more ergonomic position for the driver to reach and manipulate the handle when the door is operated.

The rear panel 80 is generally parallel to the front windshield 50 and is affixed to the upper panel 100, lower panel 40, the rear right post 30 and rear left post 25. The rear panel 80 comprises an upper rear panel 81 and lower rear panel 83. At a height between the shoulder and elbow of the seated operator is a horizontal deck 90. The deck 90 has a first storage box 91 and a second storage box 92 (both shown in phantom lines in Figures 3 and 4). The storage boxes have the capacity to accommodate several two litre soda bottles. The upper rear panel 81 also has a rear grain tank window or windows 82. The base of the upper rear panel 81 has been moved rearward creating an offset or horizontal deck 90. The off-set between the upper rear panel 81 and lower rear panel 83, besides creating the horizontal deck 90 provides the operator with the impression of greater room in the interior of the cab. It also allows the operator to recline the seat back of the operator's chair at a greater variety of angles when rearwardly positioned in the cab.

The heating, ventilation and air conditioning (HVAC) unit 84 is positioned on the exterior 87 of the lower rear panel 83 beneath the first storage box 91. The HVAC unit receives fresh air from through the fresh air filter 107. The fresh air filter 107 is positioned on the exterior 87 of the lower rear panel 83. A duct 108 brings the fresh air to the HVAC unit 84. The HVAC unit 84 also receives cab air through the return air filter 86. The return air filter 86 is positioned on the interior 88 of the lower rear panel 83. The return air filter 86 is approximately 150 mm above the lower panel 40. By positioning the intake of the return air filter 86 above the floor, the amount of dust and other particles entering the return air filter 86 is greatly reduced. Previously, return air filters have been located beneath the operator's chair. Particles are more easily sucked into the return filter which is positioned close to the floor. The processed air (either heated air or cooled air) is distributed into the cab from the HVAC unit 84 by several distribution ducts 85 on the exterior of the cab trim lines. Each distribution duct is connected to a ceiling vent or a driver's vent.

For maintenance of the harvester components, the cab 10 may be removed by the removal of four bolts 109 a, b, c and d, the unplugging of three wire harness plugs 110 a, b and c and the removal of the heat exchange core 112 of the HVAC unit 84 (Figure 5). The core 112 contains an engine coolant line 113, typically containing ethylene glycol, used for heating the cab, and a refrigerant line 114, containing a refrigerant fluid, for cooling to cool the cab. Besides making removal of the cab less complex, the refrigerant and coolant fluids in the HVAC unit 84 are not lost. It is also desirable to gain access to the core 112 for routine cleaning. Again, the core 112 can be easily slid (arrow 115) to the right and cleaned without opening or disconnecting the refrigerant or coolant lines. Because of environmental regulations, saving the refrigerant in an HVAC unit represents considerable cost savings. Furthermore, the ability to easily clean the core 112 also enables easier and more frequent maintenance. The will extend the lifespan of the expensive HVAC unit as a whole.

It will be obvious to those skilled in the art that various changes may be made without departing from the scope of the invention as defined by the claims and the invention is not to be considered limited to what is illustrated in the drawings and described in the specification. For example a similar cab arrangement may equally be used in other types of self-propelled agricultural harvesters or utility vehicles.

## Claims

1. An agricultural harvesting machine (1), having an operator's cab (10) which comprises:
a lower panel (40), a right front post (20), a left front post (25), a right rear post (30) and a left rear post (35), each said post being generally perpendicularly affixed to the lower panel (40);
an upper panel (100) supported by said right front post (20), said left front post (25), said right rear post (30) and said left rear post (35);
a front windshield (50) affixed to the lower panel (40), the upper panel (100), the right front post (20) and the left front post (25);
a left door (70) pivotally affixed to the left front post (25);
a right door (60) generally parallel to the left door (70), said right door (60) being pivotally affixed to the right front post (20); and
a rear panel (80), generally parallel to the front windshield (50) and being affixed to the lower panel (40), the left rear post (35), the right rear post (30) and the upper panel (100); and
an operator's chair (4), installed in front of said rear panel (80);
**characterized in that** said rear panel (80) comprises:
an upper rear panel section (81), affixed to the left rear post (35), the right rear post (30) and the upper panel (100);
a lower rear panel section (83), installed below said upper rear panel section (81) and being affixed to the lower panel (40), the left rear post (35) and the right rear post (30); and
a horizontal deck (90), extending between and being affixed to said upper and lower rear panel sections (81, 83).

2. An agricultural harvester according to claim 1, **characterized in that** said deck (90) is positioned at a height between the shoulder and the elbow of an operator seated on said chair (4).

3. An agricultural harvester according to claim 1 or 2, **characterized in that** said deck (90) has at least one storage box (91, 92).

4. An agricultural harvester according to any of the preceding claims, **characterized in that** the operator's chair (4) comprises a driver's seat storage area (93) having a drawer (93a) and a pull (93b).

5. An agricultural harvester according to any of the preceding claims, **characterized in that** it further comprises a heating, ventilation and air conditioning unit (84) having a core (112) comprising at least one heat exchanger and being connected to distribution ducting (85) for supplying conditioned air to the interior (88) of said cab (10),
said unit (84) being positioned on the exterior (87) of said cab (10), adjacent said lower rear panel section (83), and said core (112) being connected to refrigerant and/or engine coolant lines (113, 114).

6. An agricultural harvester according to claim 5, **characterized in that** said unit (84) is affixed on an exterior surface (87) of the lower rear panel section (83).

7. An agricultural harvester according to claim 5 or 6, **characterized in that** said :
said unit (84) is permanently attached to said cab (10) ;
said cab (10) is removably bolted to the harvester (1) ;
said core (112) is removably connected to said unit (84); and
said lines (113, 114) are not permanently attached to said cab (10), such that said core (112) may be removed from said unit (84) for enabling removal of said cab (10) from said harvester without disconnection of said lines (113, 114) from said core (112), thereby preventing loss of refrigerant and/or engine coolant.

8. An agricultural harvester according to any of the claims 5 to 7, **characterized in that** said unit (84) takes fresh air through a fresh air filter (107) which is affixed to an exterior surface (87) of the lower rear panel section (83) and connected to said unit (84).

9. An agricultural harvester according to any of the claims 5 to 8, **characterized in that** said unit (84) takes return air from the interior (88) of said cab (10) through an inlet (86) which is positioned at a substantial height above said lower panel (40).

10. An agricultural harvester according to claim 9, **characterized in that** said inlet comprises a return air filter (86) which is positioned on the interior (88) of said lower rear panel section (83) at a height of approximately 150 mm above the lower panel (40) and which is connected to said unit (84).

11. An agricultural harvester according to any of the preceding claims, **characterized in that** said front windshield (50) has a first compound curved glass surface (51).

12. An agricultural harvester according to any of the preceding claims, **characterized in that** said left door (70) has a second compound curved glass surface (71); and said right door (60) has a third compound curved glass surface (61).

13. An agricultural harvester according to claim 12, **characterized in that**:
said left door (70) is quadrilateral and able to contact the lower panel (40), the upper panel (100) and left rear post (35); and
said right door (60) is quadrilateral and able to contact the lower panel (40), the upper panel (100) and right rear post (30).

14. An agricultural harvester according to claim 12 or 13, **characterized in that** said left door (70) and said right door (60) comprise no door frame, said second compound curved glass surface (71) and said third compound curved glass surface (61) being self-supporting.

15. An agricultural harvester according to claim 14, **characterized in that**:
said second compound curved glass surface (71) is pivotally affixed to the left front post (25) by a pair of left hinges (75, 76); and
said third compound curved glass surface (61) is pivotally affixed to the right front post (20) by a pair of right hinges.

16. An agricultural harvester according to any of the claims 13 to 15, **characterized in that** the pinnacle of the second compound curved glass surface (71) and the third compound curved glass surface (61) is located at a height between the shoulder and the elbow of an operator seated on said chair (4).

17. An agricultural harvester according to any of the preceding claims, **characterized in that** the left door (70) has an angled left door handle (73).

18. An agricultural harvester according to any of the preceding claims, **characterized in that** the right front post (20) and the left front post (25) have a circumference (21, 26) which is smaller than the circumference (31, 36) of the right rear post (30) and the left rear post (35).

19. An agricultural harvester according to claim 18, **characterized in that** the right front post (20) and the left front post (25) have a circumference (21, 26) generally equal to 240 mm and the right rear post (30) and the left rear post (35) have a circumference (31, 36) generally equal to 340 mm.

## Patentansprüche

1. Landwirtschaftliche Erntemaschine (1) mit einer Fahrerkabine (10), die folgendes umfaßt:
eine untere Platte (40), eine rechte vordere Säule (20), eine linke vordere Säule (25), eine rechte hintere Säule (30) und eine linke hintere Säule (35), wobei jede der Säulen allgemein senkrecht an der unteren Platte (40) befestigt ist;
eine untere Platte (100), die von der rechten vorderen Säule (20), der linken vorderen Säule (25), der rechten hinteren Säule (30) und der linken hinteren Säule (35) abgestützt ist;
eine vordere Windschutzscheibe (50), die an der unteren Platte (40), der oberen Platte (100), der rechten vorderen Säule (20) und der linken vorderen Säule (25) befestigt ist;
eine linke Tür (70), die schwenkbar an der linken vorderen Säule (25) befestigt ist;
eine rechte Tür (60) allgemein parallel zu der linken Tür (70), wobei die rechte Tür (60) schwenkbar an der rechten vorderen Säule (20) befestigt ist; und
eine hintere Platte (80), die allgemein parallel zu der vorderen Windschutzscheibe (50) ist, und an der unteren Platte (40), der linken hinteren Säule (35), der rechten hinteren Säule (30) und der oberen Platte (100) befestigt ist; und
einen Fahrersitz (4), der vor der hinteren Platte (80) eingebaut ist;
**dadurch gekennzeichnet, daß** die hintere Platte (80) folgendes umfaßt:
einen oberen hinteren Plattenabschnitt (81), der an der linken hinteren Säule (35), der rechten hinteren Säule (30) und der oberen Platte (100) befestigt ist;
einen unteren hinteren Plattenabschnitt (83), der unter dem oberen hinteren Plattenabschnitt (81) eingebaut und an der unteren Platte (40), der linken hinteren Säule (35) und der rechten hinteren Säule (30) befestigt ist; und
eine horizontale Deckfläche (90), die sich zwischen den oberen und unteren hinteren Plattenabschnitten (81, 83) erstreckt und an diesen befestigt ist.

2. Landwirtschaftliche Erntemaschine nach Anspruch 1, **dadurch gekennzeichnet, daß** die Deckfläche (90) an einer Höhe zwischen der Schulter und dem Ellenbogen eines auf dem Fahrersitz (4) sitzenden Fahrers angeordnet ist.

3. Landwirtschaftliche Erntemaschine nach Anspruch 1 oder 2, **dadurch gekennzeichnet, daß** die Deckfläche (90) zumindest eine Aufbewahrungsbox (91, 92) aufweist.

4. Landwirtschaftliche Erntemaschine nach einem der vorhergehenden Ansprüche, **dadurch gekennzeichnet, daß** der Fahrersitz (4) einen Fahrersitz-Aufbewahrungsbereich (93) mit einer Schublade (93a) und einem Zuggriff (93b) aufweist.

5. Landwirtschaftliche Erntemaschine nach einem der vorhergehenden Ansprüche, **dadurch gekennzeichnet, daß** sie weiterhin eine Heizungs-, Belüftungs- und Klimatisierungseinheit (84) mit einem Kern (112) aufweist, der zumindest einen Wärmetauscher umfaßt und mit einem Verteilungskanalsystem (85) zur Zuführung von klimatisierter Luft an das Innere (88) der Kabine (10) verbunden ist,
wobei die Einheit (84) auf der Außenseite (87) der Kabine (10) benachbart zu dem unteren hinteren Plattenabschnitt (83) angeordnet ist, und wobei der Kern (112) mit Kältemittel- und/oder Motorkühlleitungen (113, 114) verbunden ist.

6. Landwirtschaftliche Erntemaschine nach Anspruch 5, **dadurch gekennzeichnet, daß** die Einheit (84) an einer Außenoberfläche (87) des unteren hinteren Plattenabschnittes (83) befestigt ist.

7. Landwirtschaftliche Erntemaschine nach Anspruch 5 oder 6, **dadurch gekennzeichnet, daß**:
die Einheit (84) dauernd an der Kabine (10) befestigt ist;
die Kabine (10) lösbar mit der Erntemaschine (1) verschraubt ist;
der Kern (112) lösbar mit der Einheit (84) verbunden ist; und
die Leitungen (113, 114) nicht dauerhaft an der Kabine (10) befestigt sind, derart, daß der Kern (112) von der Einheit (84) entfernt werden kann, um eine Entfernung der Kabine (10) von der Erntemaschine ohne Trennen der Leitungen (113, 114) von dem Kern (112) zu ermöglichen, wodurch ein Verlust an Kältemittel und/oder Motor-Kühlmittel verhindert wird.

8. Landwirtschaftliche Erntemaschine nach einem der Ansprüche 5-7, **dadurch gekennzeichnet, daß** die Einheit (84) Frischluft über einen Frischluftfilter (107) aufnimmt, der an einer Außenoberfläche (87) des unteren hinteren Plattenabschnittes (82) befestigt und mit der Einheit (84) verbunden ist.

9. Landwirtschaftliche Erntemaschine nach einem der Ansprüche 5-8, **dadurch gekennzeichnet, daß** die Einheit (84) Abluft von dem Inneren (88) der Kabine (10) über einen Einlaß (86) aufnimmt, der in einer erheblichen Höhe oberhalb der unteren Platte (40) angeordnet ist.

10. Landwirtschaftliche Erntemaschine nach Anspruch 9, **dadurch gekennzeichnet, daß** der Einlaß einen Abluftfilter (86) umfaßt, der auf der Innenseite (88) des unteren hinteren Plattenabschnittes (83) in einer Höhe von ungefähr 150 mm oberhalb der unteren Platte (40) angeordnet und mit der Einheit (84) verbunden ist.

11. Landwirtschaftliche Erntemaschine nach einem der vorhergehenden Ansprüche, **dadurch gekennzeichnet, daß** die vordere Windschutzscheibe (50) eine erste, eine zusammengesetzte Krümmung aufweisende Glasoberfläche (51) aufweist.

12. Landwirtschaftliche Erntemaschine nach einem der vorhergehenden Ansprüche, **dadurch gekennzeichnet, daß** die linke Tür (70) eine zweite, eine zusammengesetzte Krümmung aufweisende Glasoberfläche (71) aufweist, und daß die rechte Tür (60) eine dritte, eine zusammengesetzte Krümmung aufweisende Glasoberfläche (61) aufweist.

13. Landwirtschaftliche Erntemaschine nach Anspruch 12, **dadurch gekennzeichnet, daß**:
die linke Tür (70) vierseitig ist und in der Lage ist, die untere Platte (40), die obere Platte (100) und die linke hintere Säule (35) zu berühren; und
die rechte Tür (60) vierseitig ist und in der Lage ist, die untere Platte (40), die obere Platte (100) und die rechte hintere Säule (30) zu berühren.

14. Landwirtschaftliche Erntemaschine nach Anspruch 12 oder 13, **dadurch gekennzeichnet, daß** die linke Tür (70) und die rechte Tür (60) keinen Türrahmen aufweisen, daß die zweite, eine zusammengesetzte Krümmung aufweisende Glasoberfläche (71) und die dritte, eine zusammengesetzte Krümmung aufweisende Glasoberfläche (61) selbsttragend sind.

15. Landwirtschaftliche Erntemaschine nach Anspruch 14, **dadurch gekennzeichnet, daß**:
die zweite, eine zusammengesetzte Krümmung aufweisende Glasoberfläche (71) schwenkbar an der linken vorderen Säule (25) über ein Paar von linken Scharnieren (75, 76) befestig ist; und
die dritte, eine zusammengesetzte Krümmung aufweisende Glasoberfläche (61) schwenkbar an der rechten vorderen Säule (20) durch ein Paar von rechten Scharnieren befestigt ist.

16. Landwirtschaftliche Erntemaschine nach einem der Ansprüche 13-15, **dadurch gekennzeichnet, daß** der Scheitelpunkt der zweiten, eine zusammengesetzte Krümmung aufweisenden Glasoberfläche (71) und der dritten, eine zusammengesetzte Krümmung aufweisenden Glasoberfläche (61) in einer Höhe zwischen der Schulter und dem Ellenbogen eines Fahrers angeordnet ist, der auf dem Sitz (4) sitzt.

17. Landwirtschaftliche Erntemaschine nach einem der vorhergehenden Ansprüche, **dadurch gekennzeichnet, daß** die linke Tür (70) einen abgewinkelten linken Türgriff (73) aufweist.

18. Landwirtschaftliche Erntemaschine nach einem der vorhergehenden Ansprüche, **dadurch gekennzeichnet, daß** die rechte vordere Säule (20) und die linke vordere Säule (25) einen Umfang (21, 26) aufweisen, der kleiner als der Umfang (31, 36) der rechten hinteren Säule (30) und der linken hinteren Säule (35) ist.

19. Landwirtschaftliche Erntemaschine nach Anspruch 18, **dadurch gekennzeichnet, daß** die rechte vordere Säule (20) und die linke vordere Säule (25) einen Umfang (21, 26) allgemein gleich 240 mm aufweisen, und daß die rechte hintere Säule (30) und die linke hintere Säule (35) einen Umfang (31, 46) allgemein gleich 340 mm aufweisen.

## Revendications

1. Récolteuse agricole (1) possédant une cabine de pilotage (10) comprenant:
un panneau inférieur (40), un montant avant droit(20), un montant avant gauche (25), un montant arrière droit (30) et un montant arrière gauche (35), chaque dit montant étant fixé généralement perpendiculairement au panneau inférieur (40);
un panneau supérieur (100) soutenu par ledit montant avant droit (20) , ledit montant avant gauche (25), ledit montant arrière droit (30) et ledit montant arrière gauche (35);
un pare-brise (50) avant fixé au panneau inférieur (40); au panneau supérieur (100), au montant avant droit (20) et au montant avant gauche (25);
une porte gauche (70) fixée avec pivotement au montant avant gauche(25);
une porte droite (60) généralement parallèle à la porte gauche (70), ladite porte droite (60) étant fixée avec pivotement au montant avant droit (20); et
un panneau arrière (80), généralement parallèle au pare-brise avant (50) et étant fixé au panneau inférieur (40), au montant arrière gauche (35), au montant arrière droit (30) et au panneau supérieur (100); et
un siège de conducteur (4) installé à l'avant dudit panneau arrière (80);
**caractérisé en ce que** ledit panneau arrière (80) comprend:
une section de panneau arrière supérieur (81), fixée au montant arrière gauche (35), au montant arrière droit (30) et au panneau supérieur (100);
une section de panneau arrière inférieur (83), installée sous ladite section supérieure de panneau arrière (81) et étant fixée au panneau inférieur (40), au montant arrière gauche (35) et au montant arrière droit (30); et
une plate-forme horizontale (90), s'étendant entre lesdites sections de panneau arrière supérieur et inférieur et fixée à ces dernières (81, 83).

2. Récolteuse agricole selon la revendication 1, **caractérisée en ce que** ladite plate-forme (90) est positionnée à une hauteur comprise entre l'épaule et le coude d'un opérateur assis sur ledit siège (4).

3. Récolteuse agricole selon la revendication 1 ou 2, **caractérisée en ce que** ladite plate-forme (90) possède au moins un casier de stockage (91, 92).

4. Récolteuse agricole selon l'une quelconque des revendications précédentes, **caractérisée en ce que** le siège de conducteur (4) comprend un compartiment de stockage (93) de siège de conducteur possédant un tiroir (93a) et une poignée (93b).

5. Récolteuse agricole selon l'une quelconque des revendications précédentes, **caractérisée en ce qu'**elle comprend en outre une unité de chauffage, ventilation et climatisation (84) possédant un radiateur (112) comprenant au moins un échangeur de chaleur et étant raccordé à la tuyauterie de distribution (85) afin de fournir de l'air conditionné à l'intérieur (88) de ladite cabine (10),
ladite unité (84) étant disposée à l'extérieur (87) de ladite cabine (10), à proximité de ladite section de panneau arrière inférieur (83), ledit radiateur (112) étant raccordé aux conduites de fluide réfrigérant et/ou de liquide de refroidissement de moteur (113, 114).

6. Récolteuse agricole selon la revendication 5, **caractérisée en ce que** ladite unité (84) est fixée sur une surface extérieure (87) de la section de panneau arrière inférieur (83).

7. Récolteuse agricole selon la revendication 5 ou 6, **caractérisée en ce que**:
ladite unité (84) est fixée en permanence à ladite cabine (10);
ladite cabine (10) étant boulonnée amoviblement à la récolteuse (1);
ledit radiateur (112) est relié amoviblement à ladite unité (84); et
lesdites conduites (113, 114) ne sont pas fixées en permanence à ladite cabine (10), de telle sorte que ledit radiateur (112) puisse être enlevé de ladite unité (84) pour permettre l'enlèvement de ladite cabine (10) hors de ladite récolteuse sans déconnexion desdites conduites (113, 114) dudit radiateur (112), de manière à éviter une perte de fluide réfrigérant et/ou de liquide de refroidissement de moteur.

8. Récolteuse agricole selon l'une quelconque des revendications 5 à 7, **caractérisée en ce que** ladite unité (84) capte de l'air frais au travers d'un filtre à air frais (107) fixé sur une surface extérieure (87) de la section de panneau arrière inférieur (83) et raccordé à ladite unité (84).

9. Récolteuse agricole selon l'une quelconque des revendications 5 à 8, **caractérisée en ce que** ladite unité (84) capte de l'air de retour hors de l'intérieur (88) de ladite cabine (10) au travers d'un orifice d'entrée (86) positionné à une hauteur substantielle au-dessus dudit panneau inférieur (40).

10. Récolteuse agricole selon la revendication 9, **caractérisée en ce que** ledit orifice d'entrée comprend un filtre de retour d'air (86) positionné à l'intérieur (88) de ladite section de panneau arrière inférieur (83) à une hauteur d'environ 150 mm au-dessus du panneau inférieur (40) et raccordé à ladite unité (84).

11. Récolteuse agricole selon l'une quelconque des revendications précédentes, **caractérisée en ce que** ledit pare-brise (50) possède une première surface en verre feuilleté incurvé (51).

12. Récolteuse agricole selon l'une quelconque des revendications précédentes, **caractérisée en ce que** ladite porte gauche (70) possède une seconde surface en verre feuilleté incurvé (71); et que ladite porte droite (60) possède une troisième surface en verre feuilleté incurvé (61).

13. Récolteuse agricole selon la revendication 12, **caractérisée en ce que**:
ladite porte gauche (70) est quadrilatérale et capable d'entrer en contact avec le panneau inférieur (40), le panneau supérieur (100) et le montant arrière gauche (35); et
ladite porte droite (60) est quadrilatérale et capable d'entrer en contact avec le panneau inférieur (40), le panneau supérieur (100) et le montant arrière droit (30).

14. Récolteuse agricole selon la revendication 12 ou 13, **caractérisée en ce que** ladite porte gauche (70) et ladite porte droite (60) ne comprennent aucun encadrement de porte, ladite seconde surface de ferre feuilleté incurvé (71) et ladite troisième surface de verre feuilleté incurvé (61) étant autoportantes.

15. Récolteuse agricole selon la revendication 14, **caractérisée en ce que**:
ladite seconde surface de verre feuilleté incurvé (71) est fixée avec pivotement au montant avant gauche (25) par une paire de charnières gauches. (75, 76); et
ladite troisième surface de verre feuilleté incurvé (61) est fixée avec pivotement au montant avant droit (20) par une paire de charnières droites.

16. Récolteuse agricole selon l'une quelconque des revendications 13 à 15, **caractérisée en ce que** le summum de la seconde surface de verre feuilleté incurvé (71) et de la troisième surface de verre feuilleté incurvé (61) est situé à une hauteur comprise entre l'épaule et le coude d'un opérateur assis sur ledit siège (4).

17. Récolteuse agricole selon l'une quelconque des revendications précédentes, **caractérisée en ce que** la porte droite (70) possède une poignée coudée (73) de porte droite.

18. Récolteuse agricole selon l'une quelconque des revendications précédentes, **caractérisée en ce que** le montant avant droit (20) et le montant avant gauche (25) possèdent une section (21, 26) inférieure à la section (31, 36) du montant arrière droit (30) et du montant arrière gauche (35).

19. Récolteuse agricole selon la revendication 18, **caractérisée en ce que** le montant avant droit (20) et le montant avant gauche (25) possèdent une section (21, 26) généralement égale à 240 mm et que le montant arrière droit (30) et le montant arrière gauche (35) possèdent une section (31, 36) généralement égale à 340 mm.
